# EUROPEAN PATENT SPECIFICATION

(11) **EP 2 085 680 B1**
(45) Date of publication and mention of the grant of the patent: **12.01.2011**
(21) Application number: 09151044.6
(22) Date of filing: 21.01.2009
(51) Int. Cl.: F21K 99/00

(54) **Led lighting module**
LED-Beleuchtungsmodul
Module d'éclairage à DEL

(30) Priority: 30.01.2008 IT MI20080141
(43) Date of publication of application: 05.08.2009
(73) Proprietor: Optics Lite S.r.L., 23875 Osnago LC (IT)
(72) Inventor: Maiocchi, Stefano, 20060, Pessano con Bornago (Milano) (IT)
(74) Representative: Petruzziello, Aldo

(56) References cited:
- WO-A-03/048637
- WO-A-2006/097067
- GB-A- 2 391 702

## Description

The present invention refers to an LED lighting module.

LED lighting modules are widely used in the interior lighting field, and in the wall lighting field in particular. An LED lighting module generally comprises an LED coupled with an optical assembly consisting of a lens able to amplify the brightness of the LED.

In order to maximise the amplification of the lens, paraboloid-in-shape lenses are generally used, in which the LED is placed in the paraboloid focus.

However, such types of lighting modules comprising a single LED hold some drawbacks. In fact, when a lighting system is to be composed, it is necessary to put together a plurality of lighting modules. Since the perimeter of each lighting module is circular, it is difficult to position the lighting modules correctly. In fact, even if the modules are disposed touching each other, empty gaps still remain and the luminosity of the individual modules it not best exploited.

To overcome these drawbacks at least in part, lighting modules comprising a lens with a hexagonal perimeter are known to the art. In this manner it is possible to compose a honeycomb lighting system, reducing the empty spaces, but the problem remains of having to assemble each LED individually, together with the difficulty in obtaining a mixing of the light beams of the various LEDs.

Document WO 2006/097067 A1 shows a lighting module with four LEDs and a square holder which comprises also four lenses. The holder and the lenses are in one piece.

Object of the present invention is to overcome the drawbacks of the prior art by providing an LED lighting module that is versatile, practical, cheap and simple to produce.

Another object of the present invention is to provide such a lighting module that has a high luminosity and is able to mix the light emitted in order to light walls.

These objects are achieved in accordance with the invention with the characteristics listed in appended independent claim 1.

Advantageous embodiments of the invention are apparent from the dependent claims.

The lighting module according to the invention comprises:
- four LEDs mounted, according to a square matrix, on an essentially square printed circuit board,
- a holder disposed on said printed circuit board and provided with a square frame, and
- an optical assembly retained by said holder and provided with four paraboloid-in-shape lenses coupled to said four LEDs.

In this manner a lighting module having a square perimeter, consisting of a square matrix of four LEDs, is obtained. The main advantage of these lighting modules is represented by the fact that they can be placed side by side in order to obtain a homogeneous lighting surface. With these modules a matrix with a square or a rectangular area of the desired size can be composed, for example a matrix of m x n modules, or the modules can be disposed linearly, for example composing an array of 1 x n modules.

It must be considered that with the round lighting modules of the prior art, it is impossible to obtain these types of matrices and of arrays, even if the modules are placed touching each other.

In the module according to the invention, LEDs of different colours, i.e. emitting light of different colour, can advantageously be used to mix the light beams leaving the module. The same result can be obtained with the single-LED lighting modules of the prior art, placed side by side, but with a great assembly difficulty and a little possibility of varying the colours.

Furthermore, it must be considered that with the square, four-LED lighting module according to the invention, the colour of the LEDs can be varied on a double row. Thus is it possible to obtain types of light mixing between the two rows too.

Further characteristics of the invention will be made clearer by the detailed description that follows, referring to a purely exemplifying and therefore non limiting embodiment thereof, illustrated in the appended figures, wherein:
- Figure 1 is a perspective, exploded view showing an LED lighting module according to the invention;
- Figure 2 is a perspective view of the module of Figure 1 assembled;
- Figure 3 is a sectional view, taken along the plane of section III-III of Figure 2;
- Figure 4 is a perspective, exploded view showing the lighting module according to the invention with an optical converter; and
- Figure 5 is an enlarged, cross-sectional view of the optical converter, taken along the plane of section V-V of Figure 4.

The lighting module according to the invention, designated as a whole with the reference numeral 1, is described with the aid of the figures.

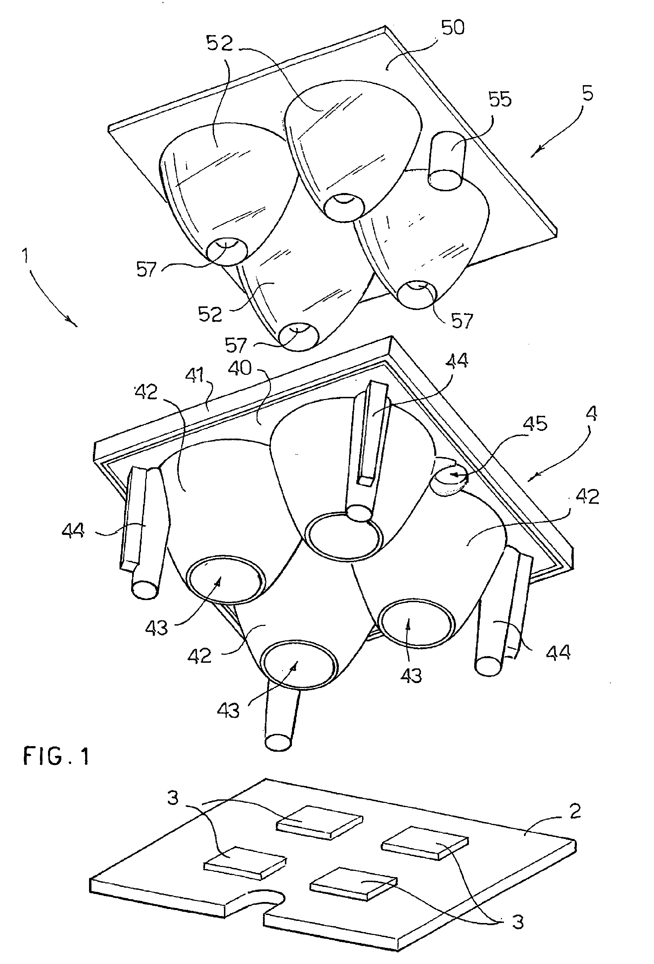

With reference for now to Figure 1, the lighting module 1 comprises a printed circuit board (PCB) 2 on which four LEDs 3 are mounted, a holder 4 adapted to be disposed on the board 2 and an optical assembly 5 adapted to be retained by the holder 4.

The printed circuit board 2 is substantially square or rectangular in shape, and the four LEDs 3 are disposed on the board 2 to form a matrix of two rows and two columns. The LEDs 3 are preferably arranged according to the corners of a square. Furthermore, the LEDs 3 are arranged at a short distance from each other, for example at a distance smaller than 1 cm, so as to minimise the overall dimensions of the module 1.

Each LED 3 is preferably a high-efficiency one and has an electrical power of about 1.2 W and a luminous flux of 100-400 Lumens. In order to obtain a mixing of the light emitted by the lighting module 1, the LEDs 3 can preferably emit light of different colours, for example Red, Green, Blue and White. With the combination of these four basic colours a vast range of composite colours can be obtained.

The holder 4 comprises a square base plate 40 around which a square frame 41 is disposed. Four tapered seats 42 with a diameter that decreases as the distance from the base plate 40 increases are formed in the base plate 40. Each seat 42 is open at its ends and defines a paraboloid-in-shape cavity 43.

At the corners of the base plate 40 are disposed four legs 44 of a length slightly greater than the length of the seats 42, so as to rest on the printed circuit board 2 maintaining the bottom edge of the seats 42 in contact with the LEDs 3. The legs 44 can be fixed to the printed circuit board 2 in any known manner, such as for example by click-in coupling, by soldering, by gluing or by means of other fixing systems.

A through hole 45 is formed near the mid-point of one side edge of the base plate 40 of the holder 4.

Returning to Figure 1, the optical assembly 5 comprises a square base plate 50, adapted to be disposed on the base plate 40 of the holder 4, contained by the frame 41 of the holder 4.

Four paraboloid-in-shape lenses 52, adapted to be inserted into the respective cavities 43 formed in the seats 42 of the holder 4, are connected to the base plate 50 of the optical assembly 5. A cylindrical centring pin 55 adapted to be inserted in the centring hole 45 of the base plate 40 of the holder 4 is connected to the base plate 50 of the optical assembly 5.

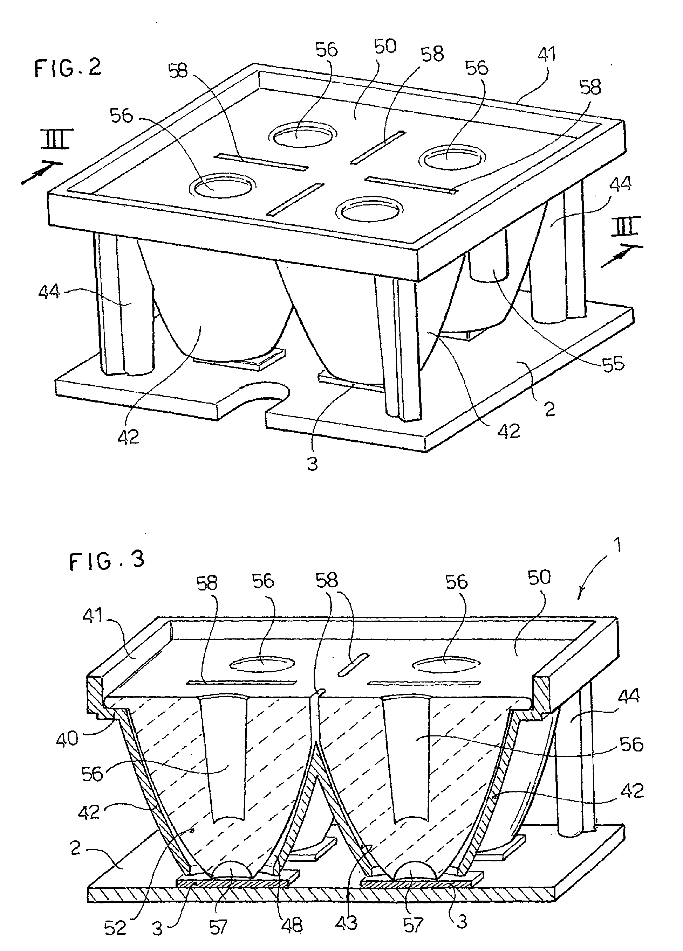

As shown in Figure 3, each paraboloid-in-shape lens 52 has on its axis a first blind hole 56, open on the base plate 50 and a second blind hole 57 open at the bottom edge of the lens 52.

The first blind hole 56 is substantially cylindrical or frustoconical in shape and the second blind hole 57 is substantially paraboloid in shape and is adapted to receive the emitting part of the LED 3.

Cooling slots 58 arranged cross-wise between the blind holes 56 are formed on the base plate 50 of the optical assembly 5. The slots 58 pass through the whole optical assembly 5 between the lenses 52 and communicate with respective gaps 48 between the lenses 52 and the seats 42 of the holder 4 wherein said lens 52 are inserted. In this manner, the hot air on the circuit board 2 is conveyed outside through said gaps 48 and said slots 58.

The optical assembly 5 is produced in a single piece by injection moulding of a suitable transparent plastic material, such as, for example, methacrylate or PMMA (polymethylmethacrylate).

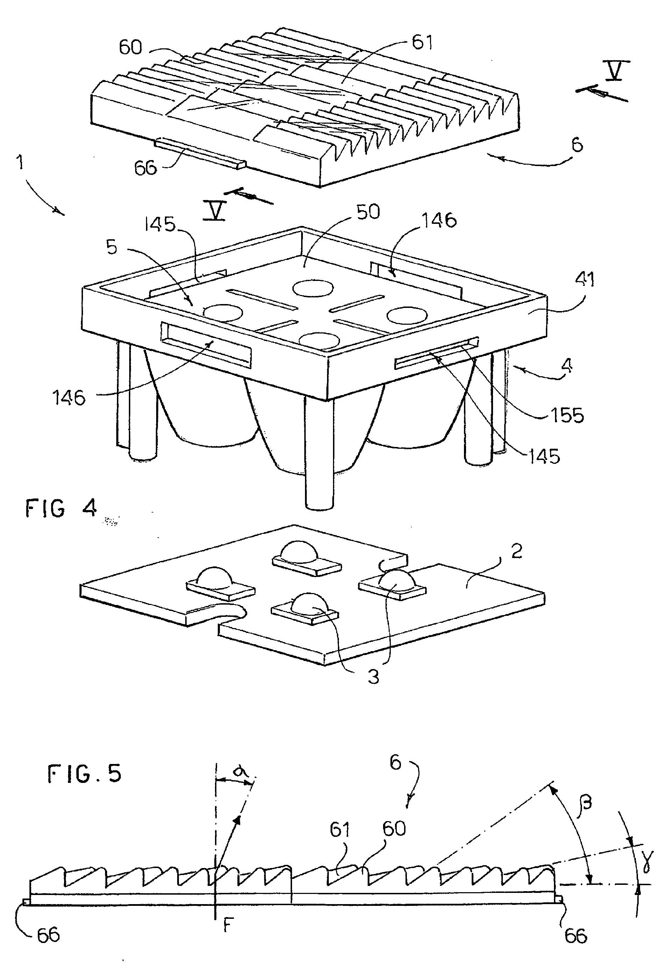

With reference to Figures 4 and 5, the lighting module 1 can include one or more optical converters 6 which serve to vary the optical aperture of the light beam leaving the optical assembly 5.

The optical converter 6 is in the form of a sheet that is disposed inside the frame 41 of the holder 4, above the flat base plate 50 of the optical assembly 5. The optical converter 6 is snap fastened into the frame 41. For this purpose, the optical converter 6 has two ribs 66 which protrude from two opposite side edges thereof. The ribs 66 of the optical converter 6 engage in respective apertures 146 formed in two opposite sides of the frame 41 of the holder 4.

The optical assembly 5 also can have, in the opposite side edges of its flat base plate 50, ribs 155 which, in figure 4, are snap engage in respective apertures 145 formed in the other two opposite sides of the square frame 41 of the holder 4.

The optical converter 6 can have a textured surface, according to the type of aperture of the light beam required.

For example, to obtain a collimated light beam, that is, with a narrow angle of aperture (about 12°), the surface of the optical converter is left smooth.

If, on the other hand, a light beam with a medium (25°) or a wide (45°) aperture is desired, the upper surface of the optical converter 6 is textured with more or less marked knurling, undulations or grooves according to the desired beam aperture.

If a light beam with an oval or elliptical section is desired, the textured surface of the optical converter 6 is made to face towards the flat base plate 50 of the optical assembly 5.

In Figures 4 and 5 an embodiment of the optical converter 6 is illustrated, in which its upper surface is textured so as to obtain an asymmetrical light beam F, having an inclination α = 6° with respect to a straight line at right angles to the plane of the optical converter. This solution is particularly suitable for lighting walls.

This result is obtained by making on the upper surface of the optical converter 6 prismatic ribs (60, 61), saw-toothed in shape in cross section, inclined towards the wall to be lit. In particular, less inclined ribs 61 are formed in a central area and more inclined ribs 60 are formed in the two lateral areas. The lateral prismatic ribs 60 have an angle of inclination β = 40° - 50° with respect to the plane of the optical converter 6. The central prismatic ribs 61, on the other hand, have an angle of inclination γ=¼ β with respect to the plane of the optical converter 6.

The optical converter 6 is made of the same material as the optical assembly 5 and has a thickness of about 1-1.8 mm, depending upon the surface texturing.

Numerous changes and modifications of detail within the reach of a person skilled in the art can be made to the present embodiment of the invention without thereby departing from the scope of the invention as set forth in the appended claims.

## Claims

1. A lighting module (1), in particular for lighting walls, comprising:
- four LEDs (3) mounted, according to a square matrix, on an essentially square printed circuit board (2),
- a holder (4) disposed on said printed circuit board (2) and provided with a square frame (41), and
- an optical assembly (5) retained by said holder (4) and provided with four paraboloid-in-shape lenses (52) coupled to said four LEDs (3),
**characterised in that** said holder (4) comprises a base plate (40) from which protrude four tapered seats (42) defining respective cavities (43), adapted to accommodate said lenses (52) of the optical assembly (5).

2. A lighting module (1) according to claim 1, **characterised in that** said four LEDs (3) are disposed at the corners of a square.

3. A lighting module (1) according to claim 1 or 2, **characterised in that** said four LEDs (3) are at a distance of less than 1 cm from each other.

4. A lighting module (1) according to any one of the preceding claims, **characterised by** the fact that said four LEDs (3) emit light of different colours.

5. A lighting module (1) according to any one of the preceding claims, **characterised in that** said optical assembly (5) comprises a square base plate (50) from which said paraboloid-in-shape lenses (52) protrude, the base plate (50) being adapted to be disposed inside said frame (41) of the holder (4).

6. A lighting module (1) according to claim 5, **characterised in that** each paraboloid-in-shape lens (52) of said optical assembly (5) has axially a first blind hole (56) open on said base plate (50) and a second blind hole (57) open at the edge of the paraboloid-in-shape lens (52) and adapted to receive the light emission part of said LED (3).

7. A lighting module (1) according to any one of the preceding claims, **characterised in that** said holder (4) comprises four legs (44) disposed at the four corners of the frame (41), adapted to be disposed on the circuit board (2) so as to keep the paraboloid-in-shape lenses (52) of the optical assembly (5) above said LEDs (3).

8. A lighting module (1) according to any one of the preceding claims, **characterised in that** said optical assembly (5) is made in a single piece.

9. A lighting module (1) according to any one of the preceding claims, **characterised in that** said optical assembly (5) comprises a centring pin (55) adapted to couple inside a centring hole (45) formed in said holder (4).

10. A lighting module (1) according to any one of the preceding claims, **characterised in that** it comprises air slots (58) formed in said optical assembly (5) and gaps (48) between the lenses (52) and the tapered seats (42) of the holder (4) wherein said lenses (52) are inserted to convey outside the hot air on said circuit board (2).

11. A lighting module (1) according to any one of the preceding claims, **characterised in that** it comprises at least one optical converter (6) disposed above said optical assembly (5) to vary the optical aperture of the light beam leaving the optical assembly (5).

12. A lighting module (1) according to claim 11, **characterised in that** said optical converter (6) is a sheet of transparent material snap coupled into the peripheral frame (41) of said holder (4).

13. A lighting module (1) according to claim 11 or 12, **characterised in that** on at least one surface said optical converter (6) has surface texturing in the form of knurling, of undulations or of ribs (60, 61).

14. A lighting module (1) according to claim 13, **characterised in that** said optical converter (6) has prismatic ribs (60, 61) inclined towards the wall to be lit so as to obtain an asymmetrical beam with an inclination (α) of about 6° with respect to a straight line at right angles to the plane of said optical assembly (6).

## Patentansprüche

1. Beleuchtungsmodul (1), insbesondere zum Beleuchten von Wänden, das Folgendes umfasst:
- vier LEDs (3), die in Form einer quadratischen Matrix auf einer im Wesentlichen quadratischen gedruckten Leiterplatte (2) montiert sind,
- einen Halter (4), der an der gedruckten Leiterplatte (2) angeordnet und mit einem quadratischen Rahmen (41) versehen ist, und
- eine optische Baugruppe (5), die durch den Halter (4) gehalten wird und mit vier parabolisch geformten Linsen (52) versehen ist, die mit den vier LEDs (3) gekoppelt sind,
**dadurch gekennzeichnet, dass** der Halter (4) eine Grundplatte (40) umfasst, von der vier verjüngte Sitze (42) hervorstehen, die jeweilige Hohlräume (43) definieren, die dafür ausgelegt sind, die Linsen (52) der optischen Baugruppe (5) aufzunehmen.

2. Beleuchtungsmodul (1) nach Anspruch 1, **dadurch gekennzeichnet, dass** die vier LEDs (3) in den Ecken eines Quadrats angeordnet sind.

3. Beleuchtungsmodul (1) nach Anspruch 1 oder 2, **dadurch gekennzeichnet, dass** die vier LEDs (3) in einem Abstand von weniger als 1 cm voneinander angeordnet sind.

4. Beleuchtungsmodul (1) nach einem der vorangehenden Ansprüche, **gekennzeichnet durch** die Tatsache, dass die vier LEDs (3) Licht von unterschiedlicher Farbe abstrahlen.

5. Beleuchtungsmodul (1) nach einem der vorangehenden Ansprüche, **dadurch gekennzeichnet, dass** die optische Baugruppe (5) eine quadratische Grundplatte (50) umfasst, von der die parabolisch geformten Linsen (52) hervorstehen, wobei die Grundplatte (50) dafür ausgelegt ist, in dem Rahmen (41) des Halters (4) angeordnet zu werden.

6. Beleuchtungsmodul (1) nach Anspruch 5, **dadurch gekennzeichnet, dass** jede parabolisch geformte Linse (52) der optischen Baugruppe (5) in axialer Richtung eine erste Blindbohrung (56) aufweist, die an der Grundplatte (50) offen ist, und eine zweite Blindbohrung (57) aufweist, die am Rand der parabolisch geformten Linse (52) offen ist und dafür ausgelegt ist, den Lichtabstrahlungsteil der LED (3) aufzunehmen.

7. Beleuchtungsmodul (1) nach einem der vorangehenden Ansprüche, **dadurch gekennzeichnet, dass** der Halter (4) vier Beine (44) umfasst, die an den vier Ecken des Rahmens (41) angeordnet sind und dafür vorgesehen sind, auf der Leiterplatte (2) dergestalt angeordnet zu werden, dass sie die parabolisch geformten Linsen (52) der optischen Baugruppe (5) über den LEDs (3) halten.

8. Beleuchtungsmodul (1) nach einem der vorangehenden Ansprüche, **dadurch gekennzeichnet, dass** die optische Baugruppe (5) einstückig ausgebildet ist.

9. Beleuchtungsmodul (1) nach einem der vorangehenden Ansprüche, **dadurch gekennzeichnet, dass** die optische Baugruppe (5) einen Zentrierstift (55) umfasst, der dafür ausgelegt ist, in eine in dem Halter (4) ausgebildete Zentrierbohrung (45) einzugreifen.

10. Beleuchtungsmodul (1) nach einem der vorangehenden Ansprüche, **dadurch gekennzeichnet, dass** es Luftschlitze (58), die in der optischen Baugruppe (5) ausgebildet sind, umfasst sowie Lücken (48) zwischen den Linsen (52) und den verjüngten Sitzen (42) des Halters (4), in die die Linsen (52) eingesetzt werden, umfasst, um die heiße Luft auf der Leiterplatte (2) abzutransportieren.

11. Beleuchtungsmodul (1) nach einem der vorangehenden Ansprüche, **dadurch gekennzeichnet, dass** es mindestens einen optischen Konverter (6) umfasst, der oberhalb der optischen Baugruppe (5) angeordnet ist, um die optische Apertur des Lichtstrahls, der die optische Baugruppe (5) verlässt, zu verändern.

12. Beleuchtungsmodul (1) nach Anspruch 11, **dadurch gekennzeichnet, dass** der optische Konverter (6) ein flaches Stück transparentes Material ist, das in den peripheren Rahmen (41) des Halters (4) eingeschnappt wird.

13. Beleuchtungsmodul (1) nach Anspruch 11 oder 12, **dadurch gekennzeichnet, dass** der optische Konverter (6) auf mindestens einer Fläche eine Oberflächentexturierung in Form einer Rändelung, einer Wellung oder von Rippungen (60, 61) aufweist.

14. Beleuchtungsmodul (1) nach Anspruch 13, **dadurch gekennzeichnet, dass** der optische Konverter (6) prismatische Rippen (60, 61) aufweist, die in Richtung der zu beleuchtenden Wand dergestalt geneigt sind, dass ein asymmetrischer Strahl mit einer Neigung (α) von etwa 6° relativ zu einer geraden Linie in einem rechten Winkel zur Ebene der optischen Baugruppe (6) erhalten wird.

## Revendications

1. Module d'éclairage (1), en particulier pour des murs d'éclairage, comprenant :
- quatre DEL (3) montées, selon une matrice carrée, sur une carte de circuits imprimés essentiellement carrée (2),
- un support (4) disposé sur ladite carte de circuits imprimés (2) et pourvu d'un cadre carré (41), et
- un ensemble optique (5) retenu par ledit support (4) et pourvu de quatre lentilles de forme parabolique (52) couplées aux dites quatre DEL (3),
**caractérisé en ce que** ledit support (4) comprend un socle (40) duquel font saillie quatre sièges coniques (42) définissant des cavités respectives (43), aptes à accueillir lesdites lentilles (52) de l'ensemble optique (5).

2. Module d'éclairage (1) selon la revendication 1, **caractérisé en ce que** lesdites quatre DEL (3) sont disposées au coin d'un carré.

3. Module d'éclairage (1) selon la revendication 1 ou 2, **caractérisé en ce que** lesdites quatre DEL (3) sont à une distance de moins de 1 cm l'une de l'autre.

4. Module d'éclairage (1) selon l'une quelconque des revendications précédentes, **caractérisé par le fait que** lesdites quatre DEL (3) émettent de la lumière de couleurs différentes.

5. Module d'éclairage (1) selon l'une quelconque des revendications précédentes, **caractérisé en ce que** ledit ensemble optique (5) comprend un socle carré (50) duquel lesdites lentilles de forme parabolique (52) font saillie, le socle (50) étant apte à être disposé à l'intérieur dudit cadre (41) du support (4).

6. Module d'éclairage (1) selon la revendication 5, **caractérisé en ce que** chaque lentille de forme parabolique (52) dudit ensemble optique (5) a un premier trou aveugle (56) ouvert sur ledit socle (50) et un deuxième trou aveugle (57) ouvert au bord de la lentille de forme parabolique (52) et apte à recevoir la partie d'émission de lumière de ladite DEL (3).

7. Module d'éclairage (1) selon l'une quelconque des revendications précédentes, **caractérisé en ce que** ledit support (4) comprend quatre pieds (44) disposés aux quatre coins du cadre (41), aptes à être disposés sur la carte de circuits (2) de manière à maintenir les lentilles de forme parabolique (52) de l'ensemble optique (5) au-dessus desdites DEL (3)

8. Module d'éclairage (1) selon l'une quelconque des revendications précédentes, **caractérisé en ce que** ledit ensemble optique (5) est constitué dans une seule pièce.

9. Module d'éclairage (1) selon l'une quelconque des revendications précédentes, **caractérisé en ce que** ledit ensemble optique (5) comprend une broche de centrage (55) apte à se coupler à l'intérieur d'un trou de centrage (45) formé dans ledit support (4).

10. Module d'éclairage (1) selon l'une quelconque des revendications précédentes, **caractérisé en ce qu'**il comprend des fentes d'air (58) formées dans ledit ensemble optique (5) et des espacements (48) entre les lentilles (52) et les sièges coniques (42) du support (4) dans lesquels lesdites lentilles (52) sont insérées pour faire sortir l'air chaud de ladite carte de circuits (2).

11. Module d'éclairage (1) selon l'une quelconque des revendications précédentes, **caractérisé en ce qu'**il comprend au moins un convertisseur optique (6) disposé au-dessus dudit ensemble optique (5) pour faire varier l'ouverture optique du faisceau de lumière sortant de l'ensemble optique (5).

12. Module d'éclairage (1) selon la revendication 11, **caractérisé en ce que** ledit convertisseur optique (6) est une feuille de matériau transparent couplée par pression dans le cadre périphérique (41) dudit support (4).

13. Module d'éclairage (1) selon la revendication 11 ou 12, **caractérisé en ce que** sur au moins une surface ledit convertisseur optique (6) a une texture de surface en forme de moletage, d'ondulations ou de nervures (60, 61).

14. Module d'éclairage (1) selon la revendication 13, **caractérisé en ce** ledit convertisseur optique (6) a des nervures prismatiques (60, 61) inclinées vers le mur à éclairer de manière à obtenir un faisceau asymétrique avec une inclinaison (α) d'environ 6° par rapport à une ligne droite perpendiculaire au plan dudit ensemble optique (6).
